(19) Europäisches Patentamt
European Patent Office
Office européen des brevets

(11) EP 4 134 473 B1

(12) EUROPEAN PATENT SPECIFICATION

(45) Date of publication and mention of the grant of the patent:
**01.04.2026 Bulletin 2026/14**

(21) Application number: **21784840.7**

(22) Date of filing: **18.02.2021**

(51) International Patent Classification (IPC):
***D01F 6/62*** *(2006.01)* ***C08G 63/00*** *(2006.01)*
***C08G 63/80*** *(2006.01)* ***D01F 6/84*** *(2006.01)*
***D01D 10/02*** *(2006.01)*

(52) Cooperative Patent Classification (CPC):
**C08G 63/06; C08G 63/605; D01D 10/02; D01F 6/62; D01F 6/84; D02J 1/18**

(86) International application number:
**PCT/JP2021/006143**

(87) International publication number:
**WO 2021/205757 (14.10.2021 Gazette 2021/41)**

# (54) LIQUID CRYSTAL POLYESTER FIBERS AND METHOD FOR PRODUCING SAME

FLÜSSIGKRISTALLPOLYESTERFASERN UND HERSTELLUNGSVERFAHREN DAFÜR

FIBRES DE POLYESTER À CRISTAUX LIQUIDES ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2020 JP 2020070885**

(43) Date of publication of application:
**15.02.2023 Bulletin 2023/07**

(73) Proprietor: **Kuraray Co., Ltd.**
**Kurashiki-shi, Okayama 710-0801 (JP)**

(72) Inventors:
- **IKEHATA, Keiichi**
**Kurashiki-shi, Okayama 713-8550 (JP)**
- **TERAMOTO, Yukihiro**
**Kurashiki-shi, Okayama 713-8550 (JP)**
- **IDE, Junya**
**Kurashiki-shi, Okayama 713-8550 (JP)**

(74) Representative: **Müller-Boré & Partner Patentanwälte PartG mbB**
**Friedenheimer Brücke 21**
**80639 München (DE)**

(56) References cited:
**WO-A1-2020/166316** **WO-A1-2020/175216**
**WO-A1-2022/113802** **JP-A- 2016 176 161**
**JP-A- 2018 040 077** **JP-A- 2018 188 742**
**JP-A- H03 260 114** **JP-A- S61 287 922**
**JP-B2- S6 118 567** **TW-A- 200 902 782**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 134 473 B1

## Description

FIELD OF THE INVENTION

This invention relates to liquid crystal polyester fibers and a method for producing the same.

BACKGROUND OF THE INVENTION

Conventionally, fiber-reinforced composite plastics have been reported as components of vibration-exposed structures such as bicycles, automobiles, railroad cars, aircraft, wind power generators, etc. The fiber-reinforced composite plastics contain liquid crystal polyester fibers, as reinforcing fibers, having higher tenacity and improved vibration damping properties compared to metal wires, glass fibers, carbon fibers, etc. For example, Patent Document 1 (JP Laid-open Patent Publication No. 2016-125051) discloses a sheet-like material with a layer containing wholly aromatic polyester fibers and a matrix resin on at least one of the outermost surfaces, wherein the layer comprises the wholly aromatic polyester fibers at a proportion of 0.1 to 80% by weight based on the total weight of the layer, the wholly aromatic polyester fibers having a basis weight of 20 to 4000 g/$m^2$, the matrix resin contains a thermosetting resin at a proportion of more than 85% by weight based on the total weight of the matrix resin, and the thickness of the layer is 0.03 to 50 mm.

Patent Documents 2 and 3 disclose a process in which as-spun liquid crystal polyester fibers are heat treated over 30 min in a temperature range according to the present method, followed by solid state polymerisation to obtain fibers with a tenacity above 18 cN/dtex.

CONVENTIONAL ART DOCUMENT

PATENT DOCUMENT

[Patent Document 1] JP Laid-open Patent Publication No. 2016-125051
[Patent Document 2] TW 200 902 782 A
[Patent Document 3] JP 2018 040077 A

SUMMARY OF THE INVENTION

Patent Document 1, however, describes a production method of a vibration damping member, the method comprising forming a sheet-like material at a temperature above the softening point and below the curing temperature of the thermosetting resin, and then curing the sheet-like material at a temperature above the curing temperature. Where the fiber-reinforced composite plastic with liquid crystal polyester fibers is produced by a process that includes heating as described above, the heating treatment generates thermal decomposition gas from the liquid crystal polyester fibers at a temperature above a specific heating temperature, resulting in occurrence of bubbles in the plastic. In order to maintain the mechanical and other properties and appearance of the resulting fiber-reinforced composite plastic, the species of the processed resin is limited to one capable of being processed at a relatively low temperature. Accordingly, there is a problem that liquid crystal polyester fibers cannot be combined with resins that require high temperatures for molding, such as, for example, a polycarbonate resin.

The present invention was made based on the problem, and an object of the present invention is to provide a liquid crystal polyester fiber which enables to produce a fiber-reinforced composite plastic with high quality by avoiding generation of bubbles during the production of the fiber-reinforced composite plastic, as well as and a production method thereof.

The inventors of the present invention have conducted extensive studies in order to achieve the aforementioned object, and found that the bubbles generated in the plastic are caused by the generation of thermal decomposition gas from the liquid crystal polyester fiber, which is triggered by decarboxylation reaction in a carboxy group where the carboxy group exists at an end of a liquid crystal polyester molecule that constitutes the liquid crystal polyester fiber. Then, the inventors further studied in order to reduce the amount of gas-genic carboxy end groups in the molecules, and found that a liquid crystal polyester as-spun yarn needs to be subjected to heat treatment for solid phase polymerization to improve tenacity thereof, and in the heat treatment, where the yarn with high moisture content is heated to reach a temperature at which solid phase polymerization effectively progresses, hydrolysis occurs at some ester bonds in molecular chains in the polymer so as to increase the amount of carboxy end groups therein. Furthermore, based on these findings, the inventors have found that a liquid crystal polyester fiber with a small amount of carboxy end groups can be obtained by conducting solid phase polymerization process after adjusting the moisture content of the fiber, leading to the completion of the

present invention.

That is, the present invention is as disclosed in claims 1 to 8.

The liquid crystal polyester fiber according to the present invention can suppress gas generation during heating so as to contribute to production of a fiber-reinforced composite plastic of good quality with few bubbles.

The producing method according to the present invention enables to produce a liquid crystal polyester fiber with a reduced total amount of carboxy end groups (total CEG amount)

BRIEF DESCRIPTION OF THE DRAWINGS

The invention will be more clearly understood from the following description of suitable embodiments with reference to the accompanying drawings. However, the embodiments and drawings are for illustration and explanation only and should not be used to define the scope of this invention. The scope of this invention is defined by the appended claims.

Fig. 1 shows a schematic diagram of a production process of liquid crystal polyester fiber in Example 1.

DESCRIPTION OF THE EMBODIMENTS

Liquid crystal polyester fiber

The liquid crystal polyester fiber according to the present invention comprises a liquid crystal polyester. The liquid crystal polyester comprises repeating structural units originating from, for example, aromatic diols, aromatic dicarboxylic acids, aromatic hydroxycarboxylic acids, etc. As long as the effect of the present invention is not spoiled, the repeating structural units originating from aromatic diols, aromatic dicarboxylic acids, and aromatic hydroxycarboxylic acids are not limited to a specific chemical composition. The liquid crystal polyester may include the structural units originating from aromatic diamines, aromatic hydroxy amines, or aromatic aminocarboxylic acids in the range which does not spoil the effect of the present invention. For example, preferable structural units may include units shown in Table 1.

Table 1

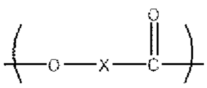 , 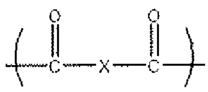 , 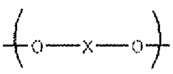 , 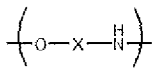

In the formula, X is selected from the following structures.

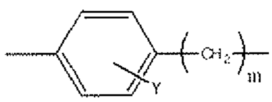 , 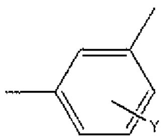 , 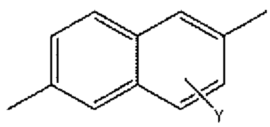 ,

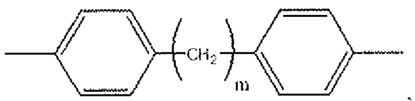 , 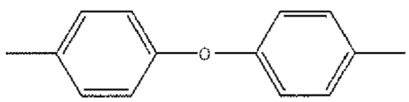 , /

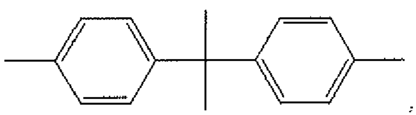 , 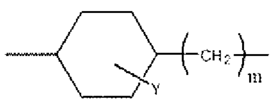 , 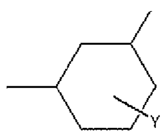

m is an integer from 0 to 2, Y is a substituent selected from hydrogen atom, halogen atoms, alkyl groups, aryl groups, aralkyl groups, alkoxy groups, aryloxy groups, aralkyloxy groups.

In the structural units in Table 1, m is an integer from 0 to 2, and Y in the formula independently represents, as from

one substituent to the number of substituents in the range of the replaceable maximum number of aromatic ring, a hydrogen atom, a halogen atom (for example, fluorine atom, chlorine atom, bromine atom and iodine atom), an alkyl group (for example, an alkyl group having 1 to 4 carbon atoms such as methyl group, ethyl group, isopropyl group and t-butyl group), an alkoxy group (for example, methoxy group, ethoxy group, isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group etc.), an aralkyloxy group (for example, benzyloxy group etc.), and others.

As more preferable structural units, there may be mentioned structural units as described in Examples (1) to (18) shown in the following Tables 2, 3, and 4. It should be noted that where the structural unit in the formula is a structural unit which can show a plurality of structures, combination of two or more units may be used as structural units for a polymer.

Table 2

| | |
|---|---|
| (1) | 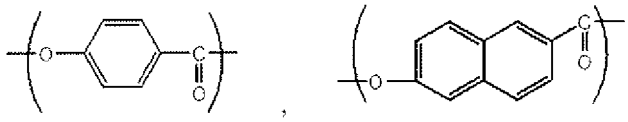 |
| (2) | 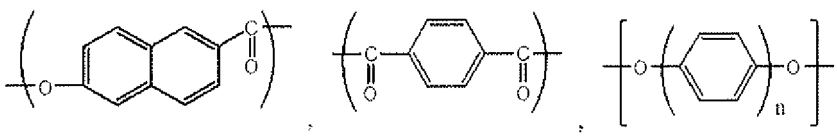 |
| (3) | 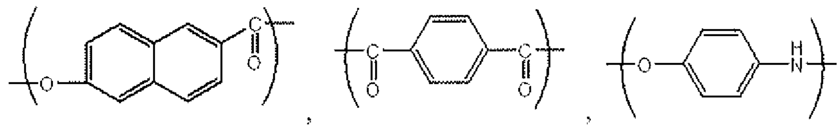 |
| (4) | 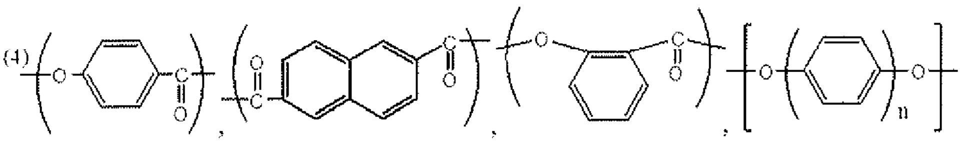 |
| (5) | 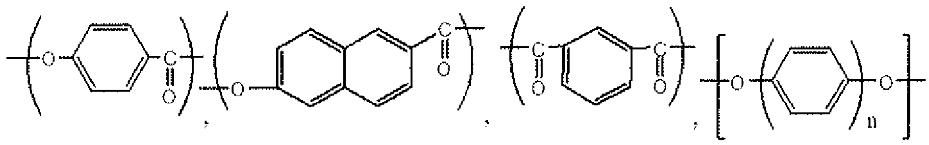 |
| (6) | 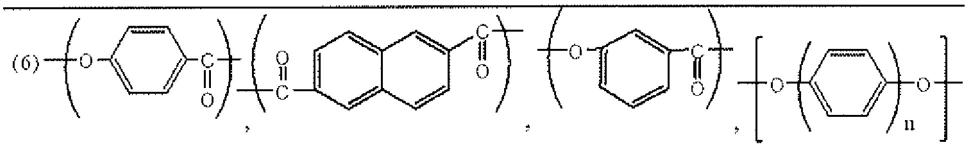 |
| (7) | 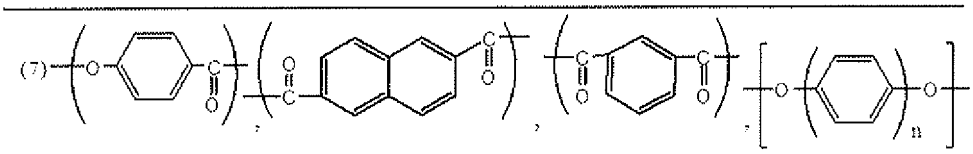 |
| (8) | 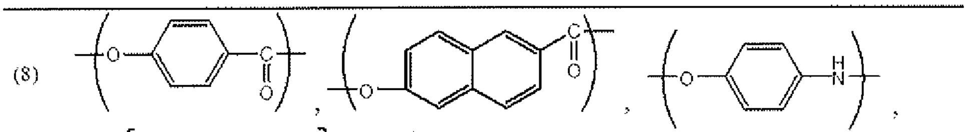 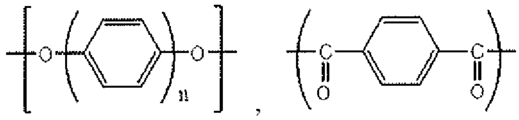 |

Table 3

| | |
|---|---|
| (9) | 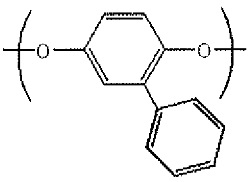 , 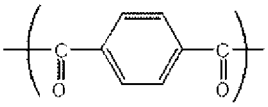 |
| (10) | 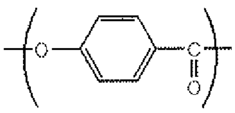 , 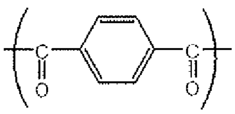 , 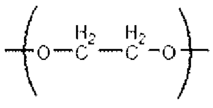 |
| (11) | 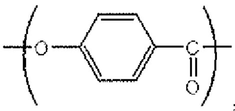 , 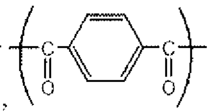 , 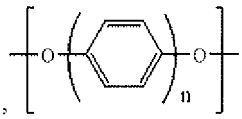 , 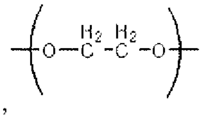 |
| (12) | 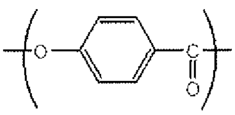 , 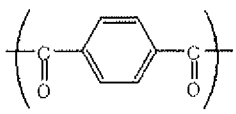 , 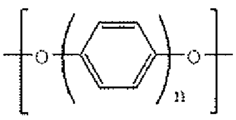 |
| (13) | 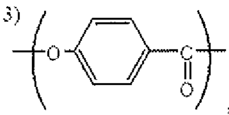 , 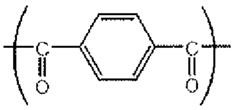 , 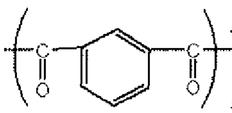 , 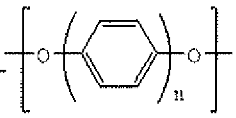 |
| (14) | 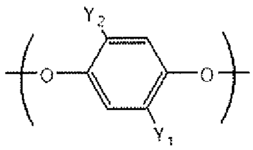 , 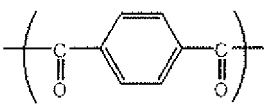 , 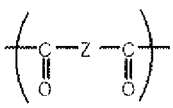 |
| (15) | 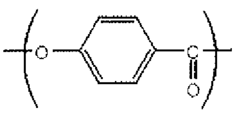 , 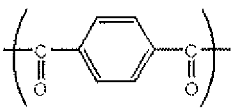 , 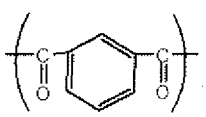 , 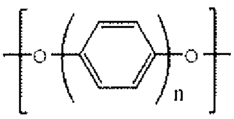 , 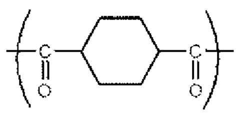 |

Table 4

| | |
|---|---|
| (16) | 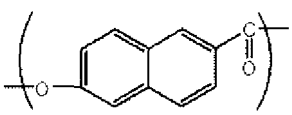 , 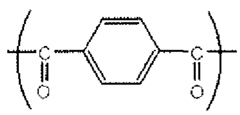 , 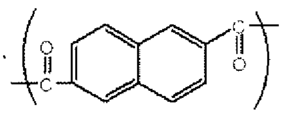 , 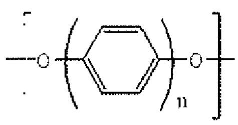 |

(continued)

| | |
|---|---|
| (17) | 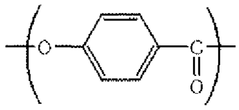 , 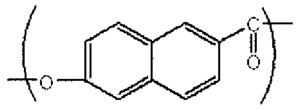 , 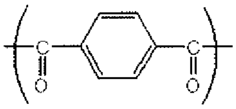 , 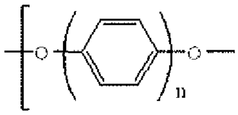 |
| (18) | 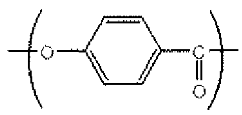 , 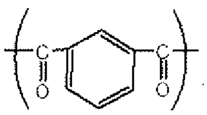 , 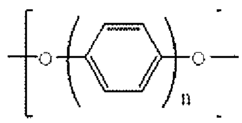 |

In the structural units shown in Tables 2, 3, and 4, n is an integer of 1 or 2, among each of the structural units, n = 1 and n = 2 may independently exist, or may exist in combination; each of the $Y_1$ and $Y_2$ independently represents, a hydrogen atom, a halogen atom (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, and isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group etc.), an aralkyloxy group (for example, benzyloxy group etc.), and others. Among these, the preferable one may include a hydrogen atom, a chlorine atom, a bromine atom, and a methyl group.

Z may include substitutional groups denoted by following formulae.

Chem. 1

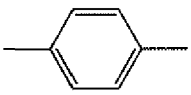 , 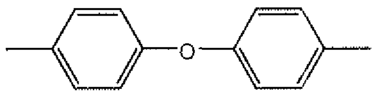 , 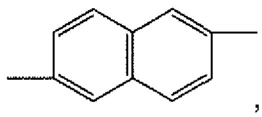 ,

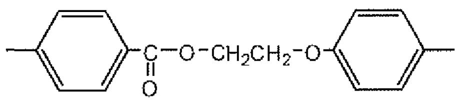 , 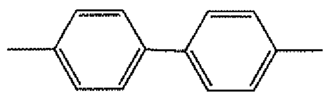

Preferable liquid crystal polyester may comprise a combination of a structural unit having a naphthalene skeleton. Especially preferable one may include both the structural unit (A) derived from hydroxybenzoic acid and the structural unit (B) derived from hydroxy naphthoic acid. For example, the structural unit (A) may have a following formula (A), and the structural unit (B) may have a following formula (B). In order to improve melt-formability, the ratio of the structural unit (A) and the structural unit (B) may preferably be in a range of former/latter of 9/1 to 1/1, more preferably from 7/1 to 1/1, and still more preferably from 5/1 to 1/1.

Chem. 2

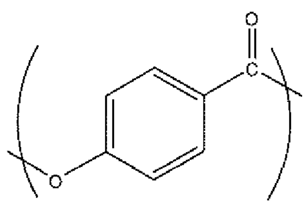 ··· (A)

Chem. 3

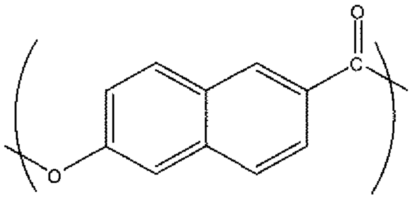

... (B)

The total proportion of the structural units of (A) and (B) may be, based on all the structural units, for example, 65 mol% or more, more preferably 70 mol% or more, and further preferably 80 mol% or more. A liquid crystal polyester having the structural unit (B) at a proportion of 4 to 45 mol % is especially preferred among polymers.

The liquid crystal polyester may also contain a structural unit derived from 4-hydroxybenzoic acid as an aromatic hydroxycarboxylic acid, a structural unit derived from an aromatic dicarboxylic acid and a structural unit derived from an aromatic diol. For example, the structural unit derived from aromatic dicarboxylic acid may be at least one unit selected from the group consisting of the following formulae (C) and (D). The structural unit derived from aromatic diol may be at least one unit selected from the group consisting of the following formulae (E) and (F). Preferable one may include a liquid crystal polyester comprising a structural unit (A) derived from 4-hydroxybenzoic acid (formula (A) above), a structural unit (C) derived from terephthalic acid (formula (C) below) and a structural unit (D) derived from isophthalic acid (formula (D) below) as an aromatic dicarboxylic acid, and a structural unit (E) derived from 4,4'-dihydroxybiphenyl (formula (E) below) as an aromatic diol, and a liquid crystal polyester comprising a structural unit (A) derived from 4-hydroxybenzoic acid (formula (A) above), a structural unit (C) derived from terephthalic acid (formula (C) below) and a structural unit (D) derived from isophthalic acid (formula (D) below) as an aromatic dicarboxylic acid, and a structural unit (E) derived from 4,4'-dihydroxybiphenyl (formula (E) below) and a structural unit (F) derived from hydroquinone (formula (F) below) as an aromatic diol, and the like.

Chem. 4

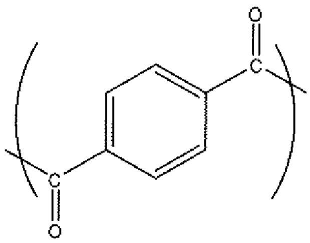

... (C)

Chem. 5

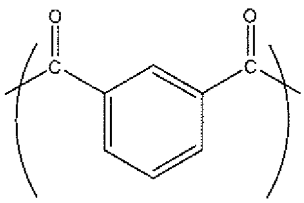

... (D)

Chem. 6

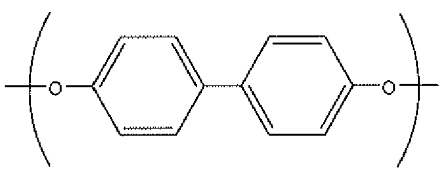

... (E)

Chem. 7

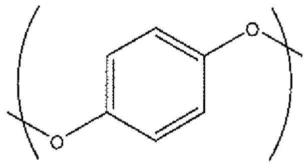

··· (F)

The liquid crystal polyester may contain a structural unit derived from 4-hydroxybenzoic acid, preferably at a proportion of 50 mol% or more, more preferably 53 mol% or more, and even more preferably 60 mol% or more. The upper limit of the content of the structural unit derived from 4-hydroxybenzoic acid in the liquid crystal polyester is not particularly limited, and may be, for example, 90 mol% or less, preferably 88 mol% or less, and more preferably 85 mol% or less.

The liquid crystal polyester suitably used in the present invention may preferably have a melting point (hereinafter sometimes referred to as $Mp_0$) in the range from 250 to 380°C, more preferably from 255 to 370°C, further preferably from 260 to 360°C, and even more preferably from 260 to 330°C. The melting point here refers to a main endothermic peak temperature determined and observed using a differential scanning calorimeter (DSC; "TA3000" produced by Mettler-Toledo International Inc.) in accordance with the JIS K 7121 test method. Specifically, 10 to 20 mg of a sample is encapsulated in an aluminum pan and taken into the aforementioned DSC device. Then the temperature is elevated at a rate of 20°C/min with supplying nitrogen as a carrier gas at a flow rate of 100 mL/min to measure an endothermic peak. Depending on the type of polymer, some polymers may not show a clear peak in the 1st run of DSC measurement. If no clear peak appears in the 1st run of DSC measurement, the sample is heated up to a temperature 50°C higher than the expected flow temperature in a temperature elevation rate of 50°C/min. After keeping the temperature for 3 minutes so as to make the sample completely molten, the sample is cooled at a cooling rate of 80°C/min to 50°C, and then is elevated at 20°C/min to measure the endothermic peak thereof.

It should be noted that the liquid crystal polyester may be used with thermoplastic polymers, such as polyethylene terephthalate, a modified-polyethylene terephthalate, a polyolefin, a polycarbonate, a polyamide, a polyphenylene sulfide, a polyether ether ketone, a fluoro-resin, and others, as long as they do not spoil the effect of the present invention. A variety of additives may also be added, including inorganic substances such as titanium oxide, kaolin, silica, and barium oxide; carbon black; a colorant such as dyes and paints; an antioxidant; an ultraviolet-ray absorbent; and a light stabilizer.

The liquid crystal polyester fiber may contain a liquid crystal polyester at a proportion of 50 wt% or more, preferably 80 wt% or more, more preferably 90 wt% or more, further preferably 95 wt% or more, and even more preferably 99.9 wt% or more.

The liquid crystal polyester fiber according to the present invention has a total amount of carboxy end groups (total CEG amount) of 5.0 mEq/kg or less. The total amount of carboxy end groups (total CEG amount) is a value measured by the method described in the Examples below, and is defined as the amount of carboxy end groups of polymer molecules in 1 kg of fiber, the polymer molecules mainly constituting the liquid crystal polyester fiber. For example, as the carboxy end groups in liquid crystal polyester, there may be exemplified carboxy groups that do not participate in reaction and remain in the terminal structural units derived from monomers having carboxy groups, such as aromatic hydroxycarboxylic acids and aromatic dicarboxylic acids.

From the viewpoint of suppressing gas generation during heating, the liquid crystal polyester fiber according to the present invention has a total CEG amount of preferably 4.5 mEq/kg or less, and more preferably 4.0 mEq/kg or less. The lower limit of the total CEG amount is not particularly limited, and may be, for example, 0.1 mEq/kg or more.

From the viewpoint of suppressing gas generation during heating, the liquid crystal polyester fiber according to the present invention may contain carboxy end groups as carboxyphenyl (-Ph-COOH; Ph (phenyl group) may contain other substituents than COOH) terminus at a CEG amount of 4.0 mEq/kg or less, preferably 3.5 mEq/kg or less, and more preferably 3.0 mEq/kg or less. The carboxy group as the carboxyphenyl terminus may be derived from a monomer having a carboxyphenyl group, such as 4-hydroxybenzoic acid, terephthalic acid, isophthalic acid, etc. (in which a phenyl group of the carboxyphenyl group may optionally have a substituent such as a halogen atom, an alkyl group, an alkoxy group, an aryl group, an aralkyl group, an aryloxy group, an aralkyloxy group, etc.). The carboxy group as the carboxyphenyl terminus is a chemical structure especially vulnerable to decarboxylation reactions, so that it is preferable to reduce the CEG amount of the carboxy groups as the carboxyphenyl terminus. The lower limit of the CEG amount of the carboxy group as the carboxyphenyl terminus is not particularly limited, and may be, for example, 0.1 mEq/kg or more.

From the viewpoint of suppressing gas generation during heating, the liquid crystal polyester fiber according to the present invention may have a ratio of the CEG amount of the carboxy group as the carboxyphenyl terminus based on the total CEG amount of 90% or less, preferably 85% or less, and more preferably 80% or less. The lower limit of the ratio of the CEG amount of the carboxy group as the carboxyphenyl terminus based on the total CEG amount is not particularly limited, and may be, for example, 5% or more.

The liquid crystal polyester fiber according to the present invention has a tenacity of 18 cN/dtex or higher. From the viewpoint of improving the mechanical strength of the fiber-reinforced composite plastic with liquid crystal polyester fibers as reinforcing fibers, the tenacity may be preferably 20 cN/dtex or higher, and more preferably 23 cN/dtex or higher. The upper limit of the tenacity is not particularly limited, and may be, for example, about 35 cN/dtex. Here in the present specification, the tenacity of liquid crystal polyester fiber refers to a tensile strength, and is a value measured by the method described in the Examples below.

From the viewpoint of improving the mechanical properties of the fiber-reinforced composite plastic as a whole, the tenacity variation of the liquid crystal polyester fiber according to the present invention may be 3.0% or less, preferably 2.7% or less, and more preferably 2.3% or less. The lower limit of the tenacity variation is not particularly limited, and may be, for example, about 0.1%. The tenacity variation is a value measured by the method described in the Examples below.

From the viewpoint of improving dimensional stability, the liquid crystal polyester fiber according to the present invention may have an initial elastic modulus of 100 cN/dtex or higher, preferably 300 cN/dtex or higher, and more preferably 500 cN/dtex or higher. The upper limit of the initial modulus is not particularly limited, and may be, for example, 1000 cN/dtex. It should be noted that the initial elastic modulus is defined as the slope of a straight line connecting two points on the tenacity-elongation curve at elongation percentages of 0.25% and 1.00%, respectively, and is a value measured by the method described in the Examples below.

From the viewpoint of improving the mechanical properties of the fiber-reinforced composite plastic as a whole, the liquid crystal polyester fiber according to the present invention has an initial elastic modulus variation of 3.0% or less, preferably 2.5% or less, and more preferably 2.3% or less. The lower limit of the initial elastic modulus variation is not particularly limited, and may be, for example, about 0.1%. Control of initial elastic modulus variation in the above range can be achieved by continuous heat treatment in the method of producing the liquid crystal polyester fiber described below. The initial elastic modulus variation is a value measured by the method described in the Examples below.

The liquid crystal polyester fiber according to the present invention may have a melting point of 290 to 400°C, preferably 300 to 380°C, and more preferably 305 to 350°C. The liquid crystal polyester fiber may have the melting point increased from the melting point of the as-spun yarn (hereinafter sometimes referred to as Mp) by solid phase polymerization. The melting point of the liquid crystal polyester fiber is the value measured by the method described in the Examples below.

The liquid crystal polyester fiber according to the present invention may have an adjusted single fiber fineness depending on the application, etc. The single fiber fineness, for example, may be 0.5 to 50 dtex, preferably from 1.0 to 35 dtex, more preferably 1.0 to 15 dtex, and even more preferably 1.5 to 10 dtex.

The liquid crystal polyester fiber according to the present invention may be a monofilament or a multifilament. In the case of multifilament, the number of filaments may be adjusted depending on the application, etc. For example, the number of filaments may be 5 to 5000 filaments, preferably 10 to 4000 filaments, and more preferably 30 to 3000 filaments.

The total fineness of the liquid crystal polyester fiber can be adjusted depending on the application, etc. For example, the total fineness may be 10 to 50000 dtex, preferably from 15 to 30000 dtex, and more preferably 25 to 10000 dtex.

Method for Producing Liquid Crystal Polyester Fiber

The inventors of the present invention have found that it is not possible to produce a liquid crystal polyester fiber with above features even if the total CEG amount of a liquid crystal polyester is adjusted before spinning. Indeed, where solid phase polymerization is carried out while as-spun yarn contains moisture, hydrolysis occurs at some ester bonds in molecular chains in the polymer so as to increase the amount of carboxy end groups therein. Accordingly, in the producing method of the present invention, a liquid crystal polyester fiber with a low amount of carboxy end groups is obtained by conducting solid phase polymerization after adjusting the moisture content of the as-spun yarn.

In other words, the method for producing the liquid crystal polyester fiber according to the present invention comprises at least subjecting the as-spun yarn to solid phase polymerization process at a temperature of 230°C or higher, wherein the moisture content of the as-spun yarn before the solid phase polymerization process is adjusted as described below. The method of heat treatment in the solid phase polymerization process is not particularly limited, and may be, for example, either a continuous heat treatment by conveyance or a batch-type heat treatment. The continuous heat treatment by conveyance is preferred from the viewpoint of suppressing variation in physical properties in the longitudinal direction of the fiber.

Continuous Heat Treatment by Conveyance

In the case of continuous heat treatment by conveyance, the method for producing the liquid crystal polyester fiber according to the present invention may comprise:

preheating a liquid crystal polyester as-spun yarn at a temperature of 80 to 220°C, and
subjecting the preheated as-spun yarn to solid phase polymerization process by heating at a temperature of 230°C or higher with conveying the preheated as-spun yarn at a pulling ratio of 1.001 to 1.200.

In the continuous heat treatment by conveyance, as-spun yarn is subjected to preheating process in a specific condition before the solid phase polymerization process, so that the as-spun yarn is dried to have a reduced moisture content. Thanks to the reduced moisture content, hydrolysis of the liquid crystal polyester can be suppressed in the subsequent solid phase polymerization process so as to obtain a high-tenacity liquid crystal polyester fiber with a low total CEG amount.

Further, heat treatment with continuously conveying the fiber at a specific pulling ratio enables to heat under more uniform environment over the fiber longitudinal direction, thereby to obtain a liquid crystal polyester fiber with reduced variation in mechanical properties in the fiber longitudinal direction.

Although the method of fiber production is not limited, a fiber obtained by melt spinning may be typically used as the as-spun yarn for a liquid crystal polyester fiber. Melt-spinning can be performed by known or conventional methods. For example, after melting in an extruder the fiber-formable resin for obtaining as-spun yarn made of liquid crystal polyester, the resin can be discharged from a nozzle at a predetermined spinning temperature, and wound by a godet roller or the like below the solidifying point.

In the preheating process, the as-spun yarn can be preheated at 80 to 220°C to be dried. The temperature of the preheating may be preferably 85°C or higher, and more preferably 90°C or higher, from the viewpoint of efficient removal of moisture from the as-spun yarn. In contrast, where the as-spun yarn with high moisture content is subjected to the temperature at which solid phase polymerization effectively progresses, occurrence of hydrolysis can increase the CEG amount. Accordingly, the temperature may be preferably 210°C or lower, and more preferably 205°C or lower. In addition, the temperature of preheating may be stepwise increased within the above temperature range in order to efficiently remove moisture depending on the number of filaments, single fiber fineness, etc. of the as-spun yarn.

From the viewpoint of efficient removal of moisture from the as-spun yarn, the preheating time may be 1 minute or more. The preheating time refers to the time of preheating the same portion of the as-spun yarn, and may preferably be 5 minutes or more, and more preferably 10 minutes or more. The upper limit of the preheating time is not particularly limited, and may be 200 minutes or less. For example, from the viewpoint of improving production efficiency, it may be 30 minutes or less.

Known methods can be used for preheating, such as atmosphere heating, contact heating, and other heating. As the atmosphere there may be suitably used air, inert gas (e.g., nitrogen, argon), or a combination thereof. From the viewpoint of moisture removal, preheating may be performed under reduced pressure.

Where preheating is performed under atmosphere, moisture can be efficiently removed by using an atmosphere with a low dew point. The dew point may be 30°C or lower, preferably 0°C or lower, and more preferably -30°C or lower.

In the solid phase polymerization process, the as-spun yarn after subjecting to the preheating process are heat-treated at a temperature of 230°C or higher to perform solid phase polymerization so that tenacity of the as-spun yarn can be enhanced. The temperature for the solid phase polymerization process may preferably be 240°C or higher, and more preferably 250°C or higher from the viewpoint of efficient tenacity improvement. The temperature for the solid phase polymerization process may be below the melting point (Mp) of the liquid crystal polyester fiber (as-spun yarn) to be subjected to the solid phase polymerization process so that the subjected fibers are prevented from melting. The temperature for the solid phase polymerization process may be, in the range of 230°C or higher, for example, Mp - 80°C or higher and lower than Mp°C, preferably Mp - 50°C or higher and lower than Mp°C, and more preferably Mp - 30°C or higher and lower than Mp°C. It should be noted that the melting point of the liquid crystal polyester fiber increases with the progress of solid phase polymerization, so that the initial temperature in the solid phase polymerization process may be below the melting point (Mp) of the liquid crystal polyester fiber (as-spun yarn). Compared with the heat treatment at a constant temperature, by increasing the temperature in steps according to the progress of solid phase polymerization, the solid phase polymerization process can be performed at a higher temperature exceeding the melting point at the initial time of the solid phase polymerization process. It is preferred to increase the temperature for the solid phase polymerization process stepwise or continuously with respect to time because it can prevent fibers from fusion as well as improve time efficiency for solid phase polymerization.

The period of the solid phase polymerization process in continuous heat treatment by conveyance may be from 5 to 1000 minutes, preferably from 8 to 500 minutes, more preferably from 10 to 100 minutes, and further preferably from 15 to 60 minutes, from the viewpoint of improving tenacity and production efficiency. The solid phase polymerization process can use known methods likewise the preheating described above.

The solid phase polymerization process in continuous heat treatment by conveyance can be performed using known methods, for example, atmosphere heating, contact heating, and other heating. As the atmosphere there may be suitably used air, inert gas (e.g., nitrogen, argon), or a combination thereof. In addition, the solid phase polymerization process can be performed under reduced pressure.

Where the solid phase polymerization process in continuous heat treatment by conveyance is performed under atmosphere, moisture can be efficiently removed by using an atmosphere with a low dew point. The dew point may be 0°C or lower, preferably -20°C or lower, and more preferably -50°C or lower.

The conveyance may be performed at least in the solid phase polymerization process, and if desired, may be performed in the preheating process. Where conveyance is performed in both the preheating process and the solid phase polymerization process, the conveyance may be performed separately in each process. For example, after preheating the as-spun yarn with conveying as the preheating process, the preheated as-spun yarn may be once wound up, then, heat treatment as the solid phase polymerization process may be performed using another conveying device. Alternatively, both the preheating process and the solid phase polymerization process may be performed using the same conveying device. From the viewpoint of improving producing efficiency, it is preferable to perform both the preheating process and the solid phase polymerization process using the same conveying device. Where both the preheating process and the solid phase polymerization process are performed using the same conveying device, temperature can be controlled either way, i.e., the temperature may be lowered after preheating from the temperature in the preheating process and then raised again to the temperature in the solid phase polymerization process; or the temperature may be raised directly from the temperature in the preheating process to the temperature in the solid phase polymerization process. In order to use a fiber with a lower moisture content for solid phase polymerization, it is preferable to directly raise the temperature from the temperature in the preheating to the temperature in the solid phase polymerization process. For example, the solid phase polymerization process may be performed following the preheating by controlling the temperature in the heat treatment furnace to raise the temperature stepwise or continuously from the temperature in the preheating to the temperature in the solid phase polymerization process.

The solid phase polymerization process may be carried out by either contact conveyance (e.g., conveyor processing, support roll processing, or heat treatment on heated rollers) or non-contact conveyance (roll-to-roll processing). From the viewpoint of conducting heat treatment in a more uniform environment while avoiding uneven heat application caused by contact with heating means so as to control variations in mechanical properties in the longitudinal direction, it is preferable to conduct heat treatment using a heat treatment furnace while conveying the as-spun yarn through roll-to-roll processing. The treatment route for roll-to-roll processing does not have to be a straight line, and may be arranged appropriately by changing route length, angle, curvature, etc. using return rollers or guides provided in the equipment to perform heat treatment. The same procedure can also be used for the preheating process.

The as-spun yarn may be conveyed at a pulling ratio of 1.000 to 1.200 times during conveyance in the solid phase polymerization process. Pulling as-spun yarn at a specific pulling ratio during conveyance makes single fibers, in the case of multifilament, to be aligned in parallel to each other without sagging at all portions in the fiber longitudinal direction. Accordingly, thus obtained multifilament achieves reduced variation in mechanical properties in the fiber longitudinal direction as well as control of decline in tenacity due to pulling. The same procedure may be applied in the preheating process.

Here, the pulling ratio is a numerical value that indicates how many times the liquid crystal polyester fiber has been pulled before and after pulling procedure. Where pulling is performed with two rollers rotating at different speeds with each other, it is calculated from the ratio of the speeds of two rollers. Where pulling is performed by a device that cannot be expressed as a speed ratio, such as pulling by the load of a dancer roller, the pulling ratio is calculated from the total fineness ratio of the fiber before and after pulling (before and after heat treatment). The pulling ratio is not limited as long as the tenacity is not greatly reduced by pulling, and may be preferably 1.001 to 1.150 times, more preferably 1.002 to 1.100 times, and even more preferably 1.003 to 1.050 times, from the viewpoint of alignment between single fibers.

The pulling method is not restricted to conduct at a specific pulling ratio, and may include, for example, a method in roll-to-roll procedure during the preheating process and the solid phase polymerization process in which a rotational speed of the downstream drive roller is adjusted to greater than that of the upstream conveying roller; a method in which heat treatment is performed using a dancer roller in the middle of conveying so as to apply a constant load to the heated as-spun yarn; a method in which heat treatment is performed by passing the as-spun yarn through heated Nelson rollers; a method in which the as-spun yarn fixed with pins or the like is heat-treated by conveyance thereby making the heated as-spun yarn to be pulled by using the property of a liquid crystal polyester fiber having a negative coefficient of thermal expansion in the fiber axial direction; and others.

Although conventional drawing technology is widely known as a technology for heat treatment while drawing fibers, this drawing technology is applied to fibers with low molecular orientation to improve the tenacity and elastic modulus of drawn fibers, and is not intended to be applied to fibers that already have a highly oriented higher-order structure, such as the liquid crystal polyester fiber according to the present invention. The suitable processing conditions between pulling and drawing technologies are also different from each other. In drawing technology, the draw ratio is often set to 1.5 times or more to increase the orientation as much as possible, whereas in the present invention, the single fibers only need to be pulled to be aligned with each other. Therefore, the pulling ratio in the range of 1.000 to 1.200 times is suitable, and if the pulling ratio exceeds the above range, molecular chain slip and other factor in the fibers cause defects of the higher-order structure, resulting in deterioration in tenacity. Therefore, since the drawing technology is different from

the pulling technology, the term pulling ratio is used in the present invention instead of draw ratio.

The tension applied during the solid phase polymerization process can be adjusted depending on the total fineness, etc. of the liquid crystal polyester fiber to be subjected to the solid phase polymerization process. From the viewpoint of stabilizing the yarn path and suppressing yarn breakage, the tension can be, for example, from 0.001 to 0.06 cN/dtex, preferably from 0.003 to 0.05 cN/dtex, and more preferably 0.005 to 0.04 cN/dtex. The same procedure may be applied in the preheating process.

Batch-Type Heat Treatment

In the case of batch-type heat treatment, the method for producing a liquid crystal polyester fiber may comprise:

subjecting a liquid crystal polyester as-spun yarn to solid phase polymerization process at a temperature of 230°C or higher,
wherein the as-spun yarn wound onto a bobbin is heated in a batch processing; and when the as-spun yarn under the solid phase polymerization process reaches to a heating temperature of 230°C, a gas generated from the subjected fiber during heat treatment has a moisture content of equal to or less than 1g per minute/kg of fiber.

In the batch-type heat treatment, by using the as-spun yarn adjusted to a specific moisture content as the as-spun yarn to be subjected to the solid phase polymerization process, hydrolysis of the liquid crystal polyester can be suppressed in the solid phase polymerization process, so as to reduce the total CEG amount, and make it possible to obtain a high tenacity liquid crystal polyester fiber with a low total CEG amount.

When the as-spun yarn under the solid phase polymerization process reaches to a heating temperature of 230°C, a gas generated from the subjected fiber during heat treatment may have a moisture content of equal to or less than 0.1 g per minute/kg of fiber, and more preferably equal to or less than 0.01 g per minute/kg of fiber. The moisture content is a value measured by the method described in the Examples below.

There is no specific restriction as for the method of adjusting the moisture content in the gas generated from the subjected fiber during heat treatment to a level below a certain level when the heat treatment temperature reaches 230°C. Such a method may include a heat treatment method by constantly supplying continuous flow of dry gas, rather than sealed heat treatment; or a heat treatment method by circulating dry gas using a circulation route system equipped with an oven for drying as-spun yarn and a facility for removing moisture from the system. Where a single oven continuously is used for the preheating process and the solid phase polymerization process, the method can advantageously avoid external moisture in the air to be attached to as-spun yarn under procedure. In the procedure, the temperature may be lowered after preheating from the temperature in the preheating process to a room temperature, and then raised again to the temperature in the solid phase polymerization process. Alternatively, the temperature may preferably be raised directly without lowered after preheating process from the temperature in the preheating process to the temperature in the solid phase polymerization process in terms of thermal efficiency.

The solid phase polymerization process may be performed by heat-treating the as-spun yarn adjusted to a specific moisture content at a temperature of 230°C or higher, so as to improve tenacity of the as-spun yarn without increasing the total CEG amount. The temperature for the solid phase polymerization process may preferably be 240°C or higher, and more preferably 250°C or higher from the viewpoint of tenacity improvement. The temperature for the solid phase polymerization process may be below the melting point (Mp) of the liquid crystal polyester fiber (as-spun yarn) to be subjected to the solid phase polymerization process so that the subjected fibers are prevented from melting. The temperature for the solid phase polymerization process may be, in the range of 230°C or higher, for example, Mp - 80°C or higher and lower than Mp°C, preferably Mp - 50°C or higher and lower than Mp°C, and more preferably Mp - 30°C or higher and lower than Mp°C. It should be noted that the melting point of the liquid crystal polyester fiber increases with the progress of solid phase polymerization, so that the initial temperature in the solid phase polymerization process may be below the melting point (Mp) of the liquid crystal polyester fiber (as-spun yarn). Compared with the heat treatment at a constant temperature, by increasing the temperature in steps according to the progress of solid phase polymerization, the solid phase polymerization process can be performed at a higher temperature exceeding the melting point at the initial time of the solid phase polymerization process. It is preferred to increase the temperature of the solid phase polymerization process stepwise or continuously with respect to time because it can prevent fibers from fusion as well as improve time efficiency for solid phase polymerization.

The period of the solid phase polymerization process in batch-type heat treatment may be from 2 to 30 hours, preferably from 3 to 24 hours, and more preferably from 5 to 20 hours, from the viewpoint of tenacity improvement. The solid phase polymerization process can be performed using known methods, for example, atmosphere heating, contact heating, and other heating. As the atmosphere there may be suitably used air, inert gas (e.g., nitrogen, argon), or a combination thereof. In addition, the solid phase polymerization process can be performed under reduced pressure.

Where the solid phase polymerization process in batch-type heat treatment is performed under atmosphere,

moisture can be efficiently removed by using an atmosphere with a low dew point. The dew point may be 0°C or lower, preferably -20°C or lower, and more preferably -50°C or lower.

The batch-type heat treatment may be, for example, performed with the as-spun yarn wound onto the bobbin in a package shape. The bobbin should withstand the temperature for the solid phase polymerization process so that it may be preferably made of metal such as aluminum, brass, iron, or stainless steel.

According to the method of producing the liquid crystal polyester fiber, in both continuous heat treatment and batch-type heat treatment, the liquid crystal polyester fiber may have a tenacity ratio of 1.5 times or more, preferably 1.8 times or more, and more preferably 2.0 times or more, before and after the solid phase polymerization process. The upper limit of the tenacity ratio of the liquid crystal polyester fiber before and after the solid phase polymerization process is not particularly limited, and may be, for example, 10 times or less. Here, the tenacity ratio before and after the solid phase polymerization process refers to a value obtained by dividing a tensile strength of the liquid crystal polyester fiber after the solid phase polymerization process by a tensile strength of the liquid crystal polyester fiber (as-spun yarn) before the solid phase polymerization process. Since the tenacity of as-spun yarn of liquid crystal polyester fiber is generally less than 12 cN/dtex, the tenacity of the liquid crystal polyester fiber can be improved by performing the solid phase polymerization process under appropriate conditions so as to achieve a tenacity ratio of 1.5 times or more before and after the solid phase polymerization process.

According to the method of producing the liquid crystal polyester fiber, in both continuous heat treatment and batch-type heat treatment, the fiber before subjecting to the solid phase polymerization process (the fiber after the preheating process) may have a moisture content (hereinafter sometimes referred to as "process moisture content") of 200 ppm or less. Where a fiber adjusted to the specific process moisture content is provided to the solid phase polymerization process, hydrolysis of the liquid crystal polyester can be suppressed in the solid phase polymerization process, leading to a high tenacity liquid crystal polyester fiber with a low total CEG amount. The process moisture content of the fiber subjected to the solid phase polymerization process may be preferably 180 ppm or less, and more preferably 150 ppm or less. The lower limit of the process moisture content of the fiber to be subjected to the solid phase polymerization process is not particularly limited, but may be, for example, 1 ppm or higher. The process moisture content is a value measured by the method described in the Examples below.

The liquid crystal polyester fiber according to the present invention can be processed into a fiber structure at least partially comprising liquid crystal polyester fibers, and used for various applications. The fiber structures can be used as any one-dimensional structures such as staple fibers, short-cut fibers, filament yarns, spun yarns, cordage, ropes, etc., and also used as two-dimensional structures such as nonwoven fabrics, woven fabrics, knitted fabrics, etc., using liquid crystal polyester fibers. Such one-dimensional and two-dimensional structures can be produced by using liquid crystal polyester fibers in conventional methods.

Fiber structures may be composed of liquid crystal polyester fibers alone or may be made by combining liquid crystal polyester fibers with other fibers. The fiber structure may be, for example, a combined yarn using liquid crystal polyester fibers and other fibers (e.g., a commingled yarn made from liquid crystal polyester fibers and other fibers or others). The fiber structure may also be a blend fabric using liquid crystal polyester fibers and other fibers (e.g., a combined nonwoven fabric or a combined woven or knitted fabric in which liquid crystal polyester fibers and other fibers are used in combination, a layered material in which a fabric of liquid crystal polyester fibers and a fabric of other fibers are used in combination, or others).

The liquid crystal polyester fiber according to the present invention can be used for applications in which liquid crystal polyester fibers are generally applicable, and can be especially suitable as a reinforcing material or matrix material for fiber-reinforced composite plastics, since gas generation from the liquid crystal polyester fiber can be suppressed during heating.

## EXAMPLE

Hereinafter, the present invention will be described in more detail with reference to Examples. However, the Examples are not intended to limit the present invention whatsoever. Various physical properties in Examples and Comparative Examples were determined in accordance with the following methods.

### Total Fineness, Single Fiber Fineness

In accordance with JIS L 1013: 2010 8.3.1 A method, 100 m of liquid crystal polyester fibers were reeled using a sizing reel "Wrap Reel by Motor Driven" manufactured by DAIEI KAGAKU SEIKI MFG. Co., Ltd., to measure the weight of the liquid crystal polyester fibers. The measurement was conducted in duplicate. Each of the weights (g) was multiplied by 100, and the average value was used as a total fineness (dtex) of the liquid crystal polyester fibers. Thus-obtained total fineness was divided by the number of filaments in the liquid crystal polyester fibers so as to give a single-fiber fineness (dtex).

Melting Point

In accordance with JIS K 7121 test method, a melting point (°C) was determined as a main endothermic peak temperature observed in measurement using a differential scanning calorimeter (DSC; "TA3000" manufactured by Mettler-Toledo International Inc.). Specifically, a melting point was determined as an endothermic peak that occurred when a sample (10 to 20 mg) introduced to an aluminum pan in the DSC device was subjected to a temperature increase at an elevation rate of 20°C/min from 25°C with supplying nitrogen as a carrier gas at a flow rate of 100 mL/min.

Tenacity and Tenacity Variation

A yarn of continuous liquid crystal polyester fibers was cut to prepare 50 samples for measurement each having a length of 1 m. These samples were taken from 50 equal sections of the fiber length in the longitudinal direction, with each section having a range of ± 0.5%.

With reference to JIS L 1013: 2010 8.5.1, using an autograph "AGS-100B" (manufactured by Shimadzu Corporation), tensile test was carried out in a condition of a test length of 10 cm, an initial load of 2.94 mN/dtex, and an extension speed of 10 cm/min to measure a tenacity at break for each sample in total 50 samples. The average value ($A_1$) of 50 measurements was calculated as a tenacity (cN/dtex).

The standard deviation ($\sigma_1$) of the 50 measurements was divided by the average value ($A_1$), and the quotient was multiplied by 100 to obtain a tenacity variation (%).

$$\text{Tenacity variation (\%)} = (\sigma_1/A_1) \times 100 \qquad (1)$$

Initial Elastic Modulus and Initial Elastic Modulus Variation

In the results measured under the same conditions as the above tenacity measurement, two points at elongation percentages of 0.25% and 1.00% were selected from the tenacity-elongation curve of each sample, and a slope of a straight line connecting the two points was calculated for each sample. The average value ($A_2$) of 50 measurements was calculated as an initial elastic modulus (cN/dtex).

In addition, the standard deviation ($\sigma_2$) of the 50 measurements was divided by the average value ($A_2$), and the quotient was multiplied by 100 to obtain an initial elastic modulus variation (%).

$$\text{Initial Elastic Modulus Variation (\%)} = (\sigma_2/A_2) \times 100 \qquad (2)$$

Process Moisture Content (Moisture Content of Yarn for Solid Phase Polymerization Process)

A liquid crystal polyester fiber sample (0.2 to 0.5 g) was prepared per specimen. Moisture content of the sample was measured using a moisture content meter (a trace moisture analyzer "CA-200" and a moisture vaporizer "VA-200" both produced by Mitsubishi Chemical Analytec Co., Ltd.), by placing the sample into a sample boat in a state that the liquid crystal polyester fibers were folded into a piece small enough to put inside the sample boat. If the sample was in a temperature environment above room temperature, in order to minimize change in moisture content during measurement process, the sample was inserted to the moisture vaporizer within 1 minute after sample preparation.

Where the preheating and solid phase polymerization processes were directly connected, a process moisture content was determined by using the liquid crystal polyester fibers that were treated without subjecting to a heat treatment zone corresponding to the solid phase polymerization process, or by using the liquid crystal polyester fibers that were taken out after completion of the preheating process by stopping heating and air flow of the oven.

Moisture Content in Gas Generated from Yarn during Heat Treatment

In a heat treatment chamber comprising an airflow outlet pipe, a side pipe for gas sampling installed in the outlet pipe was provided. From the side pipe, A liter of gas was sampled, and the moisture content in the sampled gas was measured using a moisture content meter (a trace moisture analyzer "CA-200" produced by Mitsubishi Chemical Analytec Co., Ltd.) to obtain a measured value as B grams. Further, the liquid crystal polyester fibers subjected to be heat treatment (as-spun yarn before heat treatment) were weighed as C kg, a speed of the air flow was measured as D liters/min, and a moisture content W [g/(min·kg)] in the gas generated from the subjected fibers during heat treatment was calculated per minute and per 1 kg of yarn by the following formula:

$$W = (B \times D) / (A \times C) \qquad (3)$$

CEG amount

Liquid crystal polyester resin or fiber sample was subjected to freeze grinding until having a particle size of d90 = 100 μm or less (d90: particle size that results in 90% cumulative volume in the particle size distribution), then to the ground sample was added excess amount of n-propylamine and heated under agitation at 40°C for 90 minutes to decompose the sample. In this case, the ester bonds present inside the polymer chain are decomposed into carboxylic acid n-propyl amide and hydroxy groups, whereas the carboxy end groups (CEG) and hydroxy end groups in the polymer chain are unchanged from the carboxy groups and hydroxy groups. Accordingly, the decomposition products were separated by HPLC method, and peak areas of the separated decomposition products with carboxy groups were compared with calibration curves prepared by HPLC analysis of the respective standard samples so as to quantify the amount (mEq/kg) of the carboxy end group derived from each monomer. For example, the amount of CEG derived from monovalent carboxylic acids such as 4-hydroxybenzoic acid and 6-hydroxy-2-naphthoic acid can be directly determined as the amount of 4-hydroxybenzoic acid and 6-hydroxy-2-naphthoic acid. The amount of CEG derived from divalent carboxylic acids such as terephthalic acid, isophthalic acid, and 2,6-naphthalene dicarboxylic acid can be determined by quantifying the amount of amidation products in which one of two carboxy groups is amidized, such as terephthalic acid mono-n-propyl amide, isophthalic acid mono-n-propyl amide, or 2,6-naphthalene dicarboxylic acid mono-n-propyl amide.

The sum of all the amounts of carboxy end groups contained in each sample was taken as the total carboxy end group amount (total CEG amount) of that sample. The total amount of carboxy end groups as carboxyphenyl terminus (e.g., carboxy end groups derived from monomers with carboxyphenyl groups such as 4-hydroxybenzoic acid, terephthalic acid, and isophthalic acid) contained in each sample is defined as the CEG amount of the carboxy end groups as carboxyphenyl terminus.

$CO_2$ gas generation amount

The amount of $CO_2$ gas generation under heating of liquid crystal polyester fiber was evaluated by the pyrolysis GC-BID method. Specifically, liquid crystal polyester fiber was subjected to freeze grinding until having a particle size of d90 = 100 μm or less, and used as a sample for analysis. The sample was treated at 300°C for 10 minutes using a gas chromatograph (GC) equipped with a pyrolyzer for sample introduction and a dielectric barrier discharge ionization detector (BID) for gas detection. From the generated gas, $CO_2$ gas was separated and detected so as to quantitate an amount of $CO_2$ gas generation. The measurement was carried out in triplicate on the same sample, and the average value was used as the amount of $CO_2$ gas generation (mEq/kg) from the sample.

Appearance Evaluation of Fiber Reinforced Composite Plastics

A plain fabric was produced from liquid crystal polyester fibers with a weft density of 13 yarns per 2.5 cm and a warp density of 13 yarns per 2.5 cm. The plain fabric had a basis weight of 180 $g/m^2$ and a thickness of 0.29 mm. The plain fabric was cut into a square of 10 cm on each side. Onto each of the top and bottom sides of the square was overlaid a 10-cm square polycarbonate film ("Iupilon Film FE-2000", 100 μm thick, produced by MITSUBISHI GAS CHEMICAL COMPANY, INC.), so that the overlaid material was heated at 280°C, the temperature at which the film melts completely, for 3 minutes. Thereafter, a pressure of 3 MPa was applied to the heated product for 1 minute and cooled to a temperature of less than 100°C to obtain a liquid crystal polyester fiber-reinforced composite polycarbonate resin, which was used as a sample for appearance evaluation. The weight ratio of the fibers relative to the resin in the composite was 3:4. The number of bubbles each having a diameter of 1 mm or more within a 6-cm square was counted by observing the center of sample for appearance evaluation using a loupe on the front and back surfaces.

Example 1

Liquid crystal polyester (α) ($Mp_0$: 281°C) comprising structural units (A) and (B) shown in the following formulae in a molar ratio of (A)/(B) = 73127 was used. The polymer was melt-extruded using an extruder and fed to a spinning head while being metered by a gear pump. The temperature from the extruder outlet to the spinning head was 310°C. The spinning head was equipped with a spinneret with 300 holes, each hole having a hole diameter of 0.125 mmϕ and a land length of 0.175 mm. The polymer was discharged at a discharge rate of 168 g/min and wound onto a bobbin at a winding speed of 1000 m/min to obtain an as-spun yarn. In this process, a 2 wt% aqueous solution of sodium dodecyl phosphate (Wako Pure Chemical Industries, Ltd., Wako 1st class) was added to the yarn through an oiling guide provided directly below the spinneret. The amount of the applied aqueous solution was 8.4 g/min, and the calculated adhesion ratio of

sodium dodecyl phosphate to the as-spun yarn was 0.1 wt%.

Chem. 8

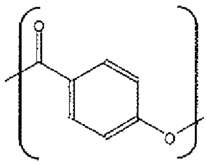 ···(A) 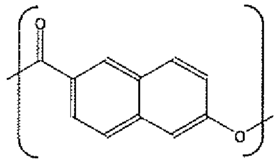 ···(B)

Next, as shown in the process schematic diagram in Fig. 1, the as-spun yarn 9 was unwound from an unwinder 1, and then the unwound as-spun yarn was passed through a first roller 2, a heat treatment furnace 3, a second roller 4 and a winder 5 in this order, to obtain a heat-treated yarn 10 as this Example by continuous heat treatment in a roll-to-roll conveyance method. Here, the heat treatment furnace 3 is provided with a furnace tube 7 made of a ceramic tube and a control unit 8 with heater sections for heating the inside of the furnace tube 7 in an atmosphere. The furnace tube 7 has six heating zones 6a to 6f. The temperature of each of the zones 6a to 6f can be separately controlled by the control unit 8, and their path lengths are same. The conditions for continuous heat treatment were set as follows. The rotational speed of the first roller 2 was set for giving a time of 60 minutes for the as-spun yarn to pass through the furnace tube 7 of the heat treatment furnace 3 (the distance at which the yarn sample passed through the furnace tube 7 of the heat treatment furnace 3 / conveying speed of the first roller 2). The rotational speed of the second roller 4 was set for giving a pulling ratio (rotational speed of the second roller 4 / rotational speed of the first roller 2) of 1.005 times. The inside of the heat treatment furnace 3 was set to a nitrogen atmosphere with a dew point of -55°C. The temperatures of the six heating zones of 6a to 6f were set in the order of passing through as 200°C, 260°C, 260°C, 260°C, 290°C and 290°C, respectively. Here, preheating process was performed at 200°C for 10 minutes in the heating zone 6a, and solid phase polymerization process was performed in the heating zones 6b through 6f at a temperature of 260°C to 290°C for 50 minutes. To adjust the height of the yarn path and like, ceramic rollers and ceramic guides with matte-finished surfaces (both not shown) were also used appropriately. The analysis results of the obtained liquid crystal polyester fiber (heat-treated yarn) and in-process analysis results such as tenacity before preheating and process moisture content are shown in Table 5.

Example 2

An as-spun yarn obtained in the same manner as in Example 1 was subjected to continuous heat treatment in a roll-to-roll conveyance method twice as follows.

As the first heat treatment, the rotational speed of the first roller 2 was set for giving a time of 60 minutes for the as-spun yarn to pass through the furnace tube 7 of the heat treatment furnace 3 (the distance at which the yarn sample passed through the furnace tube 7 of the heat treatment furnace 3 / conveying speed of the first roller 2). The rotational speed of the second roller 4 was set for giving a pulling ratio (rotational speed of the second roller 4 / rotational speed of the first roller 2) of 1.005 times. The inside of the heat treatment furnace 3 was set to a nitrogen atmosphere with a dew point of -55°C, and the heat treatment furnace 3 performed the heating only in the heating zone 6a at a temperature of 200°C, so that heating was not performed in the other heating zones of 6b to 6f.

As the second heat treatment, the preheated yarn collected in winder 5 in the first heat treatment was again unwound from the unwinder 1, and then performed the heat treatment. The rotational speed of the first roller 2 was set for giving a time of 60 minutes for the preheated yarn to pass through the furnace tube 7 of the heat treatment furnace 3 (the distance at which the yarn sample passed through the furnace tube 7 of the heat treatment furnace 3 / conveying speed of the first roller 2). The rotational speed of the second roller 4 was set for giving a pulling ratio (rotational speed of the second roller 4 / rotational speed of the first roller 2) of 1.005 times. The inside of the heat treatment furnace 3 was set to a nitrogen atmosphere with a dew point of -55°C, and the heat treatment furnace 3 performed the heating other than the heating zone 6a, so that heating was performed in the heating zones of 6b to 6f in the order of passing through at temperatures of 260°C, 260°C, 260°C, 290°C, and 290°C, respectively.

Here, the preheating process was performed at 200°C for 10 minutes in the heating zone 6a in the first heat treatment, and the solid phase polymerization process was performed in the heating zones 6b through 6f at a temperature of 260°C to 290°C for 50 minutes in the second heat treatment. To adjust the height of the yarn path and like, ceramic rollers and ceramic guides with mat-finished surfaces (both not shown) were also used appropriately. The analysis results of the obtained liquid crystal polyester fiber (heat-treated yarn) and in-process analysis results such as tenacity before preheating and process moisture content are shown in Table 5.

Example 3

A heat-treated yarn was obtained in the same manner as in Example 1, except that the temperature of heating zone 6a in heat treatment furnace 3 was set to 100°C in order to set the preheating temperature to 100°C. The analysis results of the obtained liquid crystal polyester fiber (heat-treated yarn) and in-process analysis results such as tenacity before preheating and process moisture content are shown in Table 5.

Example 4

An as-spun yarn was obtained in the same manner as in Example 1, except that a spinneret with 600 holes, each hole having a hole diameter of 0.100 mmϕ and a land length 0.140 mm was used. Then, as in Example 1, the preheating process and the solid phase polymerization process were performed to obtain a heat-treated yarn. The analysis results of the obtained liquid crystal polyester fiber (heat-treated yarn) and in-process analysis results such as tenacity before preheating and process moisture content are shown in Table 5.

Example 5

An as-spun yarn was obtained in the same manner as in Example 1, except that a spinneret with 50 holes, each hole having a hole diameter of 0.150 mmϕ and a land length 0.210 mm was used. Then, as in Example 1, the preheating process and the solid phase polymerization process were performed to obtain a heat-treated yarn. The analysis results of the obtained liquid crystal polyester fiber (heat-treated yarn) and in-process analysis results such as tenacity before preheating and process moisture content are shown in Table 5.

Example 6

An as-spun yarn was obtained in the same manner as in Example 1, except that a spinneret with 20 holes, each hole having a hole diameter of 0.125 mmϕ and a land length 0.175 mm was used; the polymer was discharged at a discharge rate of 11.2 g/min; and the amount of sodium dodecyl phosphate solution applied from the oiling guide was changed into 0.56 g/min. Then, as in Example 1, the preheating process and the solid phase polymerization process were performed to obtain a heat-treated yarn. The analysis results of the obtained liquid crystal polyester fiber (heat-treated yarn) and in-process analysis results such as tenacity before preheating and process moisture content are shown in Table 5.

Example 7

An as-spun yarn was obtained in the same manner as in Example 1, except that four sets of the spinning heads and spinnerets in Example 1 were used at the same time, the polymer was discharged from each of them at a discharge rate of 168 g/min to be combined as a single yarn and wound onto a bobbin at a winding speed of 1,000 m/min. The process of applying a sodium dodecyl phosphate solution from the oiling guide was carried out in each of the spinnerets before combining in the same way as in Example 1. Then, as in Example 1, the preheating process and the solid phase polymerization process were performed to obtain a heat-treated yarn. The analysis results of the obtained liquid crystal polyester fiber (heat-treated yarn) and in-process analysis results such as tenacity before preheating and process moisture content are shown in Table 5.

Example 8

A heat-treated yarn was obtained in the same manner as in Example 1, except that the rotational speed of the first roller 2 was set for giving a time of 960 minutes for the as-spun yarn to pass through the furnace tube 7 of the heat treatment furnace 3 (the distance at which the yarn sample passed through the furnace tube 7 of the heat treatment furnace 3 / conveying speed of the first roller 2); and the rotational speed of the second roller 4 was set for giving a pulling ratio (rotational speed of the second roller 4 / rotational speed of the first roller 2) of 1.005 times. Here, preheating process was performed at 200°C for 160 minutes in the heating zone 6a, and solid phase polymerization process was performed at 260°C to 290°C for 800 minutes in the heating zones 6b to 6f. The analysis results of the obtained liquid crystal polyester fiber (heat-treated yarn) and in-process analysis results such as tenacity before preheating and process moisture content are shown in Table 5.

Example 9

A heat-treated yarn was obtained in the same manner as in Example 1, except that the rotational speed of the second roller 4 was set for giving a pulling ratio (rotational speed of the second roller 4 / rotational speed of the first roller 2) of 1.100 times. The analysis results of the obtained liquid crystal polyester fiber (heat-treated yarn) and in-process analysis results such as tenacity before preheating and process moisture content are shown in Table 5.

Reference Example 10

A heat-treated yarn was obtained in the same manner as in Example 1, except that the rotational speed of the second roller 4 was set for giving a pulling ratio (rotational speed of the second roller 4 / rotational speed of the first roller 2) of 1.000 times. The analysis results of the obtained liquid crystal polyester fiber (heat-treated yarn) and in-process analysis results such as tenacity before preheating and process moisture content are shown in Table 5.

Example 11

An as-spun yarn was obtained in the same manner as in Example 1, except that a liquid crystal polyester (β) ($Mp_0$: 348°C) comprising structural units (A), (C), (D) and (E) shown in the following formulae in a molar ratio of (A)/(C)/(D)/(E) = 65/10/5/20 was used instead of the liquid crystal polyester (α); and the temperature from the extruder outlet to the spinning head was 350°C. Then, a heat-treated yarn was obtained in the same manner as in Example 1, except that the temperatures of the six heating zones of 6a to 6f were set in the order of passing through as 200°C, 300°C, 300°C, 300°C, 330°C and 330°C, respectively. The analysis results of the obtained liquid crystal polyester fiber (heat-treated yarn) and in-process analysis results such as tenacity before preheating and process moisture content are shown in Table 5.

Chem. 9

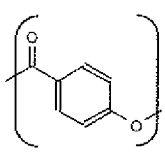 ···(A) 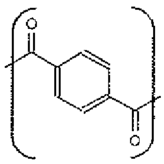 ···(C) 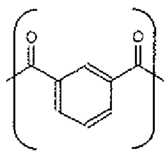 ···(D)

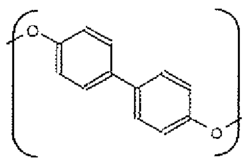 ···(E)

Example 12

An as-spun yarn was obtained in the same manner as in Example 1, except that a liquid crystal polyester (y) ($Mp_0$: 315°C) comprising structural units (A), (C), (D), (E), and (F) shown in the following formulae in a molar ratio of (A)/(C)/(D)/(E)/(F) = 54/15/8/16/7 was used instead of the liquid crystal polyester (α); and the temperature from the extruder outlet to the spinning head was 340°C. Then, a heat-treated yarn was obtained in the same manner as in Example 1, except that the temperatures of the six heating zones of 6a to 6f were set in the order of passing through as 200°C, 280°C, 280°C, 280°C, 310°C and 3 10°C, respectively. The analysis results of the obtained liquid crystal polyester fiber (heat-treated yarn) and in-process analysis results such as tenacity before preheating and process moisture content are shown in Table 5.

Chem. 10

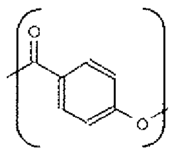 ···(A) 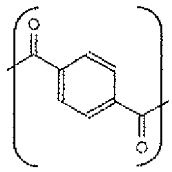 ···(C) 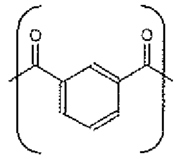 ···(D)

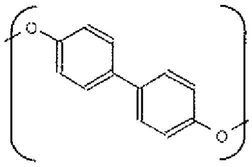 ···(E) 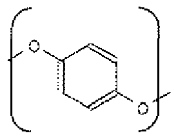 ···(F)

Comparative Example 1

A heat-treated yarn was obtained in the same manner as in Example 1, except that the temperature in heating zone 6a was set to 260°C in the continuous heat treatment. The analysis results of the obtained liquid crystal polyester fiber (heat-treated yarn) and in-process analysis results such as tenacity before preheating and process moisture content are shown in Table 5.

Comparative Example 2

A heat-treated yarn was obtained in the same manner as in Example 1, except that the temperatures in the heating zones 6b to 6f were set at 200°C in the continuous heat treatment. The analysis results of the obtained liquid crystal polyester fiber (heat-treated yarn) and in-process analysis results such as tenacity before preheating and process moisture content are shown in Table 5.

Comparative Example 3

A heat-treated yarn was obtained in the same manner as in Example 11, except that the temperature in heating zone 6a was set to 300°C in the continuous heat treatment. The analysis results of the obtained liquid crystal polyester fiber (heat-treated yarn) and in-process analysis results such as tenacity before preheating and process moisture content are shown in Table 5.

Comparative Example 4

A heat-treated yarn was obtained in the same manner as in Example 12, except that the temperature in heating zone 6a was set to 280°C in the continuous heat treatment. The analysis results of the obtained liquid crystal polyester fiber (heat-treated yarn) and in-process analysis results such as tenacity before preheating and process moisture content are shown in Table 5.

Reference Example 13

Liquid crystal polyester ($\alpha$) ($Mp_0$: 281°C) comprising the above structural units (A) and (B) in a molar ratio of (A)/(B) = 73127 was used. The polymer was melt-extruded using an extruder and fed to a spinning head while being metered by a gear pump. The temperature from the extruder outlet to the spinning head was 310°C. The spinning head was equipped with a spinneret with 300 holes, each hole having a hole diameter of 0.125 mm$\phi$ and a land length of 0.175 mm. The polymer was discharged at a discharge rate of 168 g/min and wound onto a bobbin at a winding speed of 1000 m/min to obtain an as-spun yarn. In this process, a 2.00 wt% aqueous solution of sodium dodecyl phosphate (Wako Pure Chemical Industries, Ltd., Wako 1st class) was added to the yarn through an oiling guide provided directly below the spinneret. The amount of the applied aqueous solution was 8.40 g/min, and the adhesion ratio of sodium dodecyl phosphate to the as-spun yarn was 0.100 wt%.

Next, 5 kg of the as-spun yarn was rewound onto an aluminum bobbin to have a winding density of 0.6 g/cm$^3$. The rewound yarn was heat-treated using an oven provided with two heat sources in combination of heated nitrogen flow and an electric heater under a nitrogen atmosphere with a dew point of -55°C. The temperature was raised from 20°C to 220°C

in 10 minutes (average 10°C/min) and from 220°C to 230°C in 1 minute (average 10°C/min), and then the temperature was held at 230°C for 1 minute to measure the moisture content in the gas, followed by raised from 230°C to 250°C in 2 minutes (average 10°C/minute) and held at 250°C for 16 hours to obtain a heat-treated yarn. The moisture content in the gas generated from the yarn during heat treatment at the time when the temperature reached 230°C was 0.0022 g/(min·kg). The analysis results of the obtained liquid crystal polyester fiber (heat-treated yarn) are shown in Table 5.

Comparative Example 5

A heat-treated yarn was obtained in the same manner as in Example 13, except that the concentration of the solution of sodium dodecyl phosphate (Wako Pure Chemical Industries, Wako Grade 1) was set to 0.200 wt% and the amount of the solution applied to the yarn was set to 84.0 g/min. The moisture content in the gas generated from the yarn during heat treatment at the time when the temperature reached 230°C was 3.0 g/(min·kg). The analysis results of the obtained liquid crystal polyester fiber (heat-treated yarn) are shown in Table 5.

Table 5

| | Fiber analysis values (resin, before solid phase polymerization) | | | | | | | Fiber analysis values (after solid phase polymerization) | | | | | | | | Evaluation | |
|---|---|---|---|---|---|---|---|---|---|---|---|---|---|---|---|---|---|
| | LCP | Total fineness | Single-fiber fineness | No. of filaments | Tenacity (as-spun yarn) | Tenacity (preheated yam) | Process moisture content | Total fineness | Tenacity | Tenacity variation | Initial clastic modulus | Initial elastic modulus variation | Melting point | Total CEG amount | CEG amount of carboxyphenyl | $CO_2$ gas generation | Appearance |
| | Species | dtex | dtex | Filaments | cN/dtex | cN/dtex | ppm | dtex | cN/dtex | % | cN/dtex | % | °C | mEq/kg | mEq/kg | mEq/kg | Bubbles |
| Ex.1 | (α) | 1670 | 5.6 | 300 | 9.1 | 9.1 | 101 | 1660 | 24.1 | 2.1 | 510 | 2.1 | 309 | 3.1 | 2.2 | 1.0 | 0 |
| Ex.2 | (α) | 1670 | 5.6 | 300 | 9.1 | 9.1 | 101 | 1659 | 23.8 | 2.1 | 516 | 2.4 | 308 | 3.4 | 2.5 | 1.3 | 1 |
| Ex.3 | (α) | 1670 | 5.6 | 300 | 9.1 | 9.1 | 112 | 1660 | 24.0 | 2.0 | 492 | 2.5 | 309 | 3.0 | 2.1 | 1.0 | 0 |
| Ex.4 | (α) | 1670 | 2.8 | 600 | 9.2 | 9.2 | 75 | 1656 | 23.3 | 1.8 | 522 | 2.3 | 308 | 3.2 | 2.2 | 1.1 | 0 |
| Ex.5 | (α) | 1670 | 33.4 | 50 | 9.1 | 9.1 | 91 | 1663 | 22.5 | 2.2 | 548 | 2.4 | 308 | 3.1 | 2.2 | 1.0 | 0 |
| Ex.6 | (α) | 112 | 5.6 | 20 | 9.3 | 9.3 | 187 | 112 | 25.0 | 2.1 | 550 | 2.1 | 311 | 3.1 | 2.2 | 1.1 | 0 |
| Ex.7 | (α) | 6720 | 5.6 | 1200 | 8.5 | 8.5 | 69 | 6660 | 21.9 | 2.2 | 423 | 2.3 | 307 | 3.3 | 2.3 | 1.1 | 1 |
| Ex.8 | (α) | 1670 | 5.6 | 300 | 9.1 | 9.1 | 78 | 1655 | 25.7 | 2.1 | 533 | 21 | 318 | 3.3 | 2.3 | 1.1 | 0 |
| Ex.9 | (α) | 1670 | 5.6 | 300 | 9.1 | 9.1 | 107 | 1516 | 20.4 | 2.4 | 536 | 2.4 | 309 | 3.3 | 2.3 | 1.2 | 0 |
| Ex.10 | (α) | 1670 | 5.6 | 300 | 9.1 | 9.1 | 108 | 1670 | 23.0 | 3.7 | 517 | 3.4 | 310 | 3.1 | 2.2 | 1.0 | 0 |
| Ex.11 | (β) | 1670 | 5.6 | 300 | 7.0 | 7.0 | 80 | 1639 | 24.6 | 2.6 | 948 | 2.1 | 365 | 3.3 | 3.3 | 1.5 | 2 |
| Ex.12 | (γ) | 1670 | 5.6 | 300 | 8.2 | 8.2 | 75 | 1643 | 23.7 | 2.1 | 561 | 2.3 | 348 | 3.7 | 3.7 | 1.4 | 2 |
| Com. Ex. 1 | (α) | 1670 | 5.6 | 300 | 9.1 | - | 579 | 1658 | 20.7 | 2.6 | 489 | 2.9 | 312 | 9.6 | 6.8 | 3.6 | 8 |
| Com. Ex.2 | (α) | 1670 | 5.6 | 300 | 9.1 | 9.1 | 703 | 1672 | 9.6 | 2.1 | 440 | 2.2 | 284 | 6.2 | 4.4 | 2.1 | 4 |
| Com. Ex.3 | (β) | 1670 | 5.6 | 300 | 7.0 | - | 557 | 1640 | 19.4 | 2.8 | 816 | 2.4 | 368 | 13.4 | 13.4 | 6.5 | 18 |
| Com. Ex.4 | (γ) | 1670 | 5.6 | 300 | 8.2 | - | 512 | 1639 | 19.0 | 3.0 | 524 | 2.2 | 351 | 15.8 | 15.8 | 8.0 | 20 |
| Ex. 13 | (α) | 1670 | 3.6 | 300 | 9.1 | 9.1 | 47 | 1670 | 25.4 | 4.2 | 485 | 4.0 | 326 | 4.4 | 3.2 | 1.5 | 1 |
| Com. Ex.5 | (α) | 1670 | 5.6 | 300 | 9.1 | 9.1 | 11034 | 1670 | 18.9 | 6.0 | 474 | 7.3 | 326 | 11.5 | 8.4 | 4.4 | 10 |

As shown in Table 5, in Examples 1 and 3 to 12, since the yarns were preheated at 200°C or 100°C in the heating zone 6a of the heat treatment furnace 3, the preheated yarns with reduced moisture contents passed through subsequent heating zones 6b to 6f for solid phase polymerization, so as to make it possible to obtain the liquid crystal polyester fibers with reduced total CEG amounts. In Example 2 in which the continuous heat treatment was divided into two separate heat treatments, since the yarn was preheated in the first continuous heat treatment at 200°C, the preheated yarn with reduced moisture contents passed through the subsequent second continuous heat treatment for solid phase polymerization, so as to make it possible to obtain the liquid crystal polyester fiber with reduced total CEG amount. As a result, the liquid crystal polyester fibers in Examples 1-12 can suppress the amount of gas generation, so that bubble generation can be suppressed in the fiber-reinforced composite plastics produced by using these fibers. Further, in Examples 1-9, 11, and 12, since the liquid crystal polyester fibers were produced by continuous heat treatment by conveyance at controlled pulling ratios, the produced fibers have reduced variation in mechanical properties in the longitudinal direction of the fibers.

On the other hand, in Comparative Examples 1, 3, and 4, as-spun yarns without being subjected to preheating were heat-treated from the heating zone 6a of the heat treatment furnace 3 at 260°C, 300°C and 280°C, respectively, depending on the type of liquid crystal polyester resin, resulting in increased total CEG amounts in the liquid crystal polyester fibers. It is presumed that the increased total CEG amounts are caused by hydrolysis of the polymer molecules during solid phase polymerization of the as-spun yarns with high moisture content. Therefore, the liquid crystal polyester fibers of Comparative Examples 1, 3, and 4 produce more than twice as much $CO_2$ gas as in Example 1, leading to generation of more bubbles in the fiber-reinforced composite plastics produced by using these fibers than those in the fiber-reinforced composite plastics of Examples 1 to 12.

In Comparative Example 2, lack of solid phase polymerization, which is effectively progressed by heating at a temperature of 230°C or higher, contributes to insufficient increase in tenacity of the liquid crystal polyester fiber failing to reach a tenacity of 18 cN/dtex. Therefore, it is inferred that the fiber-reinforced composite plastic produced by using the liquid crystal polyester fiber of Comparative Example 2 does not have sufficient mechanical properties.

In Reference

Example 13, the solid phase polymerization process of the as-spun yarn with reduced moisture content in the batch-type heat treatment makes it possible to obtain the liquid crystal polyester fiber with reduced total CEG amount. As a result, the liquid crystal polyester fiber in Example 13 can suppress the amount of gas generation, so that bubble generation can be suppressed in the fiber-reinforced composite plastic produced by using the fibers.

On the other hand, in Comparative Example 5, the total CEG amount is large due to the high moisture content of the as-spun yarn subjected to the solid phase polymerization process. Therefore, the liquid crystal polyester fiber of Comparative Example 5 produces more than twice as much $CO_2$ gas as in Example 13, leading to generation of more bubbles in the fiber-reinforced composite plastic produced by using these fibers than those in the fiber-reinforced composite plastic of Example 13.

INDUSTRIAL APPLICABILITY

According to the liquid crystal polyester fibers of the present invention, gas generation from the liquid crystal polyester fibers can be suppressed when being heated, so that the liquid crystal polyester fibers can be suitably used as a reinforcing material for fiber-reinforced composite plastics. Further, the liquid crystal polyester fibers can also be suitably used as a filler material in applications where short cut liquid crystal polyester fibers are mixed with a rubber or a resin because gas generation from the liquid crystal polyester fibers can be suppressed when heated during molding or usage.

Although the preferred embodiments of the present invention have been described, various additions, modifications, or deletions may be made without departing from the scope of the invention. Accordingly, such variants are included within the scope of the present invention.

REFERENCE NUMERALS

| | |
|---|---|
| 1 | Unwinder |
| 2 | First roller |
| 3 | Heat treatment furnace |
| 4 | Second roller |
| 5 | Winder |
| 6a, 6b, 6c, 6d, 6e, 6f | Heating zone |
| 7 | Furnace tube |

8 Control unit

**Claims**

1. A liquid crystal polyester fiber having a total amount of carboxy end groups (total CEG amount) of 5.0 mEq/kg or less, a tenacity of 18 cN/dtex or higher, and an initial elastic modulus variation of 3.0% or less, wherein
the total CEG amount, the tenacity, and the initial elastic modulus variation are determined in accordance with the measurement methods defined in the description.

2. The liquid crystal polyester fiber according to claim **1,** comprising a liquid crystal polyester having a structural units derived from 4-hydroxybenzoic acid at a proportion of 50 mol% or more.

3. The liquid crystal polyester fiber according to claim 1 or 2, wherein the liquid crystal polyester fiber contains carboxy end groups as carboxyphenyl terminus at a CEG amount of 4.0 mEq/kg or less, and
the CEG amount of the carboxy end groups as carboxyphenyl terminus is determined in accordance with the measurement method defined in the description.

4. A method for producing the liquid crystal polyester fiber as recited in any one of claims 1 to 3 comprising:

   preheating a liquid crystal polyester as-spun yarn at a temperature of 80 to 220°C, and
   subjecting the preheated as-spun yarn to solid phase polymerization process at a temperature of 230°C or higher with conveying the preheated as-spun yarn at a pulling ratio of 1.001 to 1.200.

5. The method according to claim 4, wherein the preheating process and the solid phase polymerization process are carried out under roll-to-roll conveyance.

6. The method according to any one of claims 4 or 5, wherein the liquid crystal polyester fiber has a tenacity ratio of 1.5 times or more before and after the solid phase polymerization process, and
the tenacity ratio is determined in accordance with the measurement method defined in the description.

7. The method according to any one of claims 4 to 6, wherein the as-spun yarn before subjecting to the solid phase polymerization process has a moisture content of 200 ppm or less, and
the moisture content of the as-spun yarn before the solid phase polymerization process is determined in accordance with the measurement method defined in the description.

8. A fiber structure at least partially comprising the liquid crystal polyester fibers as recited in any one of claims 1 to 3.

**Patentansprüche**

1. Flüssigkristallpolyesterfaser mit einer Gesamtmenge an Carboxylendgruppen (Gesamt-CEG-Menge) von 5,0 mEq/kg oder weniger, einer Tenazität von 18 cN/dtex oder höher und einer anfänglichen Elastizitätsmoduländerung von 3,0% oder weniger, wobei
die Gesamt-CEG-Menge, die Tenazität und die anfängliche Elastizitätsmoduländerung gemäß den in der Beschreibung definierten Messverfahren bestimmt werden.

2. Flüssigkristallpolyesterfaser nach Anspruch 1, umfassend einen Flüssigkristallpolyester mit strukturellen Einheiten abgeleitet von 4-Hydroxybenzoesäure in einem Anteil von 50 mol% oder mehr.

3. Flüssigkristallpolyesterfaser nach Anspruch 1 oder 2, wobei die Flüssigkristallpolyesterfaser Carboxylendgruppen als Carboxyphenylterminus bei einer CEG-Menge von 4,0 mEq/kg oder weniger enthält, und
die CEG-Menge der Carboxylendgruppen als Carboxyphenylterminus gemäß dem in der Beschreibung definierten Messverfahren bestimmt wird.

4. Verfahren zur Herstellung der Flüssigkristallpolyesterfaser wie in einem der Ansprüche 1 bis 3 angegeben, umfassend:

   das Vorwärmen eines Flüssigkristallpolyester-As-Spun-Garns bei einer Temperatur von 80 bis 220 °C, und

das Unterziehen des vorgewärmten As-Spun-Garns einem Festphasenpolymerisationsprozess bei einer Temperatur von 230°C oder höher unter Fördern des vorgewärmten As-Spun-Garns mit einem Zugverhältnis von 1,001 bis 1,200.

**5.** Verfahren nach Anspruch 4, wobei der Vorwärmprozess und der Festphasenpolymerisationsprozess unter Roll-zu-Roll-Förderung durchgeführt werden.

**6.** Verfahren nach einem der Ansprüche 4 oder 5, wobei die Flüssigkristallpolyesterfaser ein Tenazitätsverhältnis von 1,5-fach oder mehr vor und nach dem Festphasenpolymerisationsprozess aufweist, und
das Tenazitätsverhältnis gemäß dem in der Beschreibung definierten Messverfahren bestimmt wird.

**7.** Verfahren nach einem der Ansprüche 4 bis 6, wobei das As-Spun-Garn vor dem Unterziehen dem Festphasenpolymerisationsprozess einen Feuchtigkeitsgehalt von 200 ppm oder weniger aufweist, und
der Feuchtigkeitsgehalt des As-Spun-Garns vor dem Festphasenpolymerisationsprozess gemäß dem in der Beschreibung definierten Messverfahren bestimmt wird.

**8.** Faserstruktur mindestens teilweise umfassend die Flüssigkristallpolyesterfasern wie in einem der Ansprüche 1 bis 3 angegeben.

## Revendications

**1.** Fibre de polyester à cristaux liquides ayant une quantité totale de groupes terminaux carboxy (quantité totale de GTC) de 5,0 mEq/kg ou moins, une ténacité de 18 cN/dtex ou supérieure, et un changement du module d'élasticité initial de 3,0 % ou moins, où
la quantité totale de GTC, la ténacité et le changement du module d'élasticité initial sont déterminés selon les procédés de mesure définis dans la description.

**2.** Fibre de polyester à cristaux liquides selon la revendication 1, comprenant un polyester à cristaux liquides ayant des unités structurales dérivées de l'acide 4-hydroxybenzoïque en une proportion de 50 % molaire ou plus.

**3.** Fibre de polyester à cristaux liquides selon la revendication 1 ou 2, où la fibre de polyester à cristaux liquides contient des groupements terminaux carboxy sous forme de terminaisons carboxyphényle en une quantité de GTC de 4,0 mEq/kg ou moins, et
la quantité de GTC des groupements terminaux carboxy sous forme de terminaisons carboxyphényle est déterminée selon le procédé de mesure défini dans la description.

**4.** Procédé pour produire la fibre de polyester à cristaux liquides décrite dans l'une quelconque des revendications 1 à 3 comprenant:

le préchauffage d'un fil de polyester à cristaux liquides brut de filage à une température de 80 à 220°C, et
l'exposition du fil brut de filage préchauffé à un processus de polymérisation en phase solide à une température de 230°C ou supérieure avec convoyage du fil brut de filage préchauffé à un rapport de tractions de 1,001 à 1,200.

**5.** Procédé selon la revendication 4, où le processus de préchauffage et le processus de polymérisation en phase solide sont effectués sous convoyage rouleau à rouleau.

**6.** Procédé selon l'une quelconque des revendications 4 ou 5, où la fibre de polyester à cristaux liquides a un rapport de ténacités de 1,5 fois ou plus avant et après le processus de polymérisation en phase solide, et
le rapport de ténacités est déterminé selon le procédé de mesure défini dans la description.

**7.** Procédé selon l'une quelconque des revendications 4 à 6, où le fil brut de filage avant l'exposition au processus de polymérisation en phase solide a une teneur en humidité de 200 ppm ou moins, et
la teneur en humidité du fil brut de filage avant le processus de polymérisation en phase solide est déterminée selon le procédé de mesure défini dans la description.

**8.** Structure fibreuse comprenant au moins partiellement les fibres de polyester à cristaux liquides décrites dans l'une quelconque des revendications 1 à 3.

Fig. 1

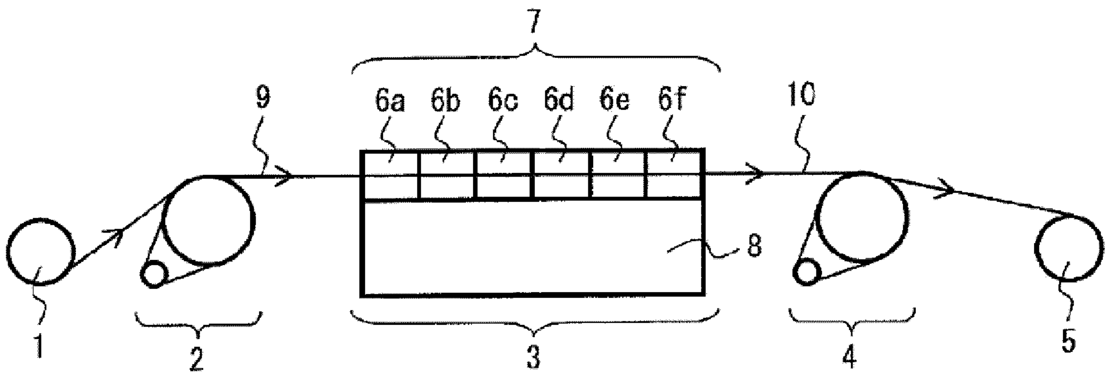

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016125051 A
- TW 200902782 A
- JP 2018040077 A